# EUROPÄISCHE PATENTSCHRIFT

(11) **EP 1 853 990 B1**
(45) Veröffentlichungstag und Bekanntmachung des Hinweises auf die Patenterteilung: **30.09.2009**
(21) Anmeldenummer: 06724903.7
(22) Anmeldetag: 01.03.2006
(51) Int. Cl.: G06F 3/033

(54) **EINGABEVORRICHTUNG UND EINGABEVERFAHREN SOWIE EIN ENTSPRECHENDES COMPUTERPROGRAMM UND EIN ENTSPRECHENDES COMPUTERLESBARES SPEICHERMEDIUM**
INPUT DEVICE, INPUT METHOD, CORRESPONDING COMPUTER PROGRAM, AND CORRESPONDING COMPUTER-READABLE STORAGE MEDIUM
DISPOSITIF D'ENTREE ET PROCEDE D'ENTREE, AINSI QUE PROGRAMME INFORMATIQUE CORRESPONDANT ET SUPPORT D'ENREGISTREMENT LISIBLE PAR ORDINATEUR CORRESPONDANT

(30) Priorität: 04.03.2005 DE 102005011356
(43) Veröffentlichungstag der Anmeldung: 14.11.2007
(73) Patentinhaber: Perkunder, Hannes, 12055 Berlin (DE)
(72) Erfinder: Perkunder, Hannes, 12055 Berlin (DE)
(74) Vertreter: Hengelhaupt, Jürgen
(86) Internationale Anmeldenummer: PCT/EP2006/060356
(87) Internationale Veröffentlichungsnummer: WO 2006/092406

(56) Entgegenhaltungen:
- EP-A- 0 905 645
- EP-A- 1 376 063
- DE-A1- 10 133 177
- US-A1- 2004 032 395
- US-B1- 6 297 795

## Beschreibung

Die Erfindung betrifft eine Eingabevorrichtung und ein Eingabeverfahren sowie ein entsprechendes Computerprogramm und ein entsprechendes computerlesbares Speichermedium, welche insbesondere einsetzbar sind, um Parameter für Datenverarbeitungsprogramme oder elektrische Geräte in Verbindung mit einer grafischen Benutzeroberfläche (GUI - Graphical User Interface) mit hoher Genauigkeit verändern zu können.

### Stand der Technik

Zur Bedienung einer grafischen Benutzeroberfläche (GUI) eines Computers oder (im Folgenden wird dies stets impliziert) anderer mit Hilfe eines GUI bedienbarer Geräte sind eine Vielzahl von Eingabevorrichtungen bekannt, allen voran die so genannte Maus, welche sich quasi als Standard etabliert hat. Durch die Bewegung der Maus über eine plane Oberfläche werden Signale generiert, die an den zu steuernden Computer weitergeleitet werden und eine entsprechende zweidimensionale Bewegung des Mauszeigers auf einem Bildschirm erzeugen. Mit der oder den Tasten einer Maus können dann beispielsweise grafische Bedienelemente auf dem Bildschirm in bekannter Weise selektiert, aktiviert, "festgehalten", bewegt usw. werden.

Darüber hinaus gibt es diverse Eingabegeräte, welche von ihrer Steuerwirkung und Kompatibilität her mit der Maus gleichzusetzen sind, jedoch anders bedient werden.

So genannte Trackballs, Touchpads und Joysticks sind hierfür Beispiele. Diese Art von Eingabegeräten ist implizit gemeint, wenn im Folgenden von der Maus die Rede ist.

Im Bereich des computerbasierten, digitalen Tonstudios haben sich so genannte Hardware-Controller etabliert, welche vornehmlich über eine MIDI-Schnittstelle die entsprechende Audio-Software steuern und dieser meist sehr spezifisch ängepasst sind. Als Hardware-Bedienelemente sind hier Tasten, Dreh- und (motorisierte) Schieberegler üblich. Insbesondere Drehregler besitzen für kontinuierliche Steuerbewegungen, wie sie zum Beispiel beim Mischen im computerbasierten Tonstudio permanent vorkommen, entscheidende Vorteile gegenüber der Maus. Eine durch die Finger ausgeführte Drehbewegung ermöglicht eine wesentlich größere sensorisch-haptische und feinmotorische Kontrolle der Steuerung als die hauptsächlich durch den Arm ausgeführte Mausbewegung.

Aus der deutschen Offenlegungsschrift DE 102 45 333 A1 ist eine Eingabevorrichtung mit Drehregler bekannt. Diese sieht eine erste Bedieneinheit zur Bewegung einer Anzeigemarke, wie beispielsweise eines Cursors, und eine zweite Bedieneinheit für die Änderung von Parametern zur Steuerung weiterer Programme vor. Beide Bedieneinheiten generieren insbesondere unterschiedliche Signale, da die Betätigung der ersten Bedieneinheit eine Anzeigemarke positioniert, wohingegen eine Betätigung der zweiten Bedieneinheit die Anzeigemarken-Position nicht verändert, sondern andere Eingabeparameter verändert - beispielsweise Senderfrequenzen eines Autoradios. Im Rahmen der in der deutschen Offenlegungsschrift DE 102 45 333 A1 beschriebenen Lösung darf die Betätigung der zweiten Bedieneinheit auch keine Anzeigemarken-Bewegung erzeugen, da die Auswahl des zu verändernden Parameters gerade dadurch erfolgt, dass die Anzeigemarke an eine bestimmte Stelle des GUI geführt wird. Eine Änderung der Anzeigemarken-Position während der Betätigung der zweiten Eingabeeinheit würde somit unter Umständen dazu führen, dass die Anzeigemarke zu einer Stelle des GUI geführt wird, welche vorgesehen ist, einen anderen Parameter zu verändern. In diesem Falle würde dann (ungewollt) der zweite Parameter verändert. Auch in dieser Lösung ist somit die Bedieneinheit speziell an das Anwendungsprogramm, beispielsweise an die Bediensoftware des Auto-radios, angepasst. Von der schon unter Windows 2000 vorhandenen Applikation "Volume Control" (Lautsprecher Crone unten rechts in der Taskbar) ist es bekannt das herkömmliche Drehrädchen zum Verschieben eines selektierten Schiebereglers zu verwenden. Dieses herkömmliche Drehrädchen (siehe US 6 697 050, Figur 3) erzeugt jedoch eindmensionale Signale (Zählerstände). Diese sind nicht kompatibel zu den schon auf dem Markt vorhandenen Applikationen. Bei diesen werden die Schieberegler mittels Verschieben der Haus (und Feshalten) eingestellt. Bekannt ist außerdem das (meist als zusätzliches Bedienelement einer Maus vorkommende) Scrollrad, bei welchem ein Rändelrad ohne Anschlag vornehmlich die Bildlauf-Leisten (Scrollbalken) eines softwareseitig entsprechend angepassten Programms unabhängig von der Mauszeigerposition direkt steuert, sofern das entsprechende Programmfenster aktiv ist.

Es gibt zudem Geräte mit einem Drehregler ohne Anschlag, welche mit einem Computer verbunden werden und durch die Konfiguration einer entsprechenden Treiber-Software verschiedenen Parametern (z. B. der Lautstärke eines Media-Players) zur Steuerung zugeordnet werden. Die zu steuernde Software muss jedoch diese Geräte unterstützen. Die Zahl der hiermit steuerbaren Parameter ist in der Praxis begrenzt und die Zuordnung der zu steuernden Parameter zum Gerät eher indirekt und umständlich.

Nachteilig an den vorstehend beschriebenen Lösungen ist entweder das Fehlen des für präzise Parameter-Steuerungen ergonomisch günstigen Drehreglers als Bedienelement oder die jeweils spezielle und unflexible Abhängigkeit der zu steuernden Programme bzw. Geräte von diesen Eingabegeräten. Die bekannten Drehregler sind demzufolge zur Steuerung von anderen als den spezieller angepassten Programmen nicht geeignet, insbesondere nicht zur Steuerung von Programmen, welche ausschließlich eine Parametereingabe über ein GUI unter Verwendung von Eingabegeräten, wie beispielsweise Maus, Touchpad oder dergleichen, gestatten.
Derartige Programme sind beispielsweise bedienbar, indem auf dem GUI ein Schieberegler oder andere grafische Objekte dargestellt werden, die in einem ersten Schritt ausgewählt werden, indem durch Bewegung der Maus der Cursor auf dem GUI über dem Reglerknopf des virtuellen Schiebereglers oder über dem grafischen Objekt positioniert wird, in einem zweiten Schritt Reglerknopf oder grafisches Objekt in der Regel durch Drücken und Halten einer Maustaste (der häufig so genannten "linken Maustaste", welche im Folgenden als Hauptselektions-Taste bezeichnet wird und durch welche bei Drücken, Halten und Loslassen die im Folgenden so bezeichneten Hauptselektions-Signale generiert werden) "festgehalten" wird, in einem dritten Schritt durch Bewegen der Maus Reglerknopf oder grafisches Objekt verschoben wird und in einem vierten Schritt durch Loslassen der Hauptselektions-Taste wieder "losgelassen" wird. Um den virtuellen Regler präzise bedienen oder das grafische Objekt genau verschieben zu können, wäre es auch für solche Programme wünschenswert, anstelle der universellen, aber unpräzisen Eingabegeräte Maus, Trackball, Touchpad, Joystick usw. einen Drehregler zu verwenden.

### Aufgabe der Erfindung

Die Aufgabe der Erfindung besteht somit darin, eine Eingabevorrichtung und ein Eingabeverfahren sowie ein entsprechendes Computerprogramm und ein entsprechendes computerlesbares Speichermedium bereitzustellen, welche die Nachteile der bekannten Lösungen beheben sowie insbesondere eine ergonomische Eingabevorrichtung für die GUI-gestützte Steuerung von Programmen oder Geräten ermöglichen.

Diese Aufgabe wird erfindungsgemäß durch die Merkmale in den Ansprüchen 1, 9, 13 und 14 gelöst. Zweckmäßige Ausgestaltungen der Erfindung sind in den Unteransprüchen enthalten.

### Vorteile der Erfindung

Ein besonderer Vorteil der erfindungsgemäßen Eingabevorrichtung mit Drehregler zur Steuerung von über eine grafische Benutzeroberfläche einer Datenverarbeitungseinrichtung bedienbaren Programmen besteht darin, dass derartige Programme mit hoher Präzision gesteuert werden können, indem die Eingabevorrichtung derart eingerichtet ist, dass bei Betätigung des Drehreglers eine Signalfolge erzeugt wird, welche ein Betriebssystem der Datenverarbeitungseinrichtung veranlasst, die Werte der für die Positionierung eines Positionszeigers (Cursor) auf der grafischen Benutzeroberfläche genutzten Daten derart zu ändern, dass der Positionszeiger auf einer im Wesentlichen linearen Bahn auf der grafischen Benutzeroberfläche bewegt wird, wenn er gemäß der für die Positionierung genutzten Daten visualisiert wird. Die Präzision dieser Steuerung entsteht dabei durch die überragende sensorisch-haptische und feinmotorische Kontrolle der Drehregler-Bedienung im Zusammenspiel mit der Einschränkung der Freiheitsgrade der Positionszeiger-Bewegung.

In einer bevorzugten Ausführungsform der erfindungsgemäßen Eingabevorrichtung ist vorgesehen, dass die Eingabevorrichtung derart eingerichtet ist, dass in die bei Betätigung des Drehreglers, insbesondere durch eine Drehbetätigung, erzeugte Signalfolge Signale eingefügt werden, welche den Signalen beim Drücken und Festhalten, beim Loslassen und/oder beim Klicken einer oder mehrerer Tasten eines oder mehrerer Eingabegeräte entsprechen. Damit wird z. B. erreicht, dass die von der Eingabevorrichtung erzeugte Signalfolge einer Signalfolge entspricht, die eine Maus, Trackball, Touchpad o. dgl. beim Drücken, Halten und Loslassen ihrer Tasten, insbesondere Drücken und Halten ihrer Hauptselektions-Taste (im Folgenden als Festhalte-Signal bezeichnet), generiert. Somit werden bei Drehbetätigung des Drehreglers in nur einem Bedienungsschritt virtuelle Regler und Objekte auf dem GUI "festgehalten" und präzise bewegt bzw. verändert. Zusätzliche Handgriffe bzw. Arbeitsschritte wie Drücken von Tasten anderer Eingabegeräte, Drücken des Drehreglers selbst oder dergleichen werden dadurch überflüssig. Als Vorteil erweist es sich darüber hinaus, dass erfindungsgemäß die im wesentlichen lineare Bahn des Cursors schräg auf der grafischen Benutzeroberfläche verläuft. Da bei einer schrägen Cursor-Bahn gleichzeitig Anteile der waagerechten und der senkrechten Bewegungskomponente geändert werden, werden durch dieses Vorgehen gleichzeitig Werte erzeugt, welche z. B. zur Bedienung von waagerechten und von senkrechten virtuellen Schiebereglern genutzt werden können.

Ein weiterer wichtiger Vorteil der erfindungsgemäßen Eingabevorrichtung besteht darin, dass mit dieser Eingabevorrichtung bei entsprechend vorhandenen und geeigneten grafischen Bedienelementen und/oder Objekten alle Programme bedient werden können, welche auch mit einer Computermaus gesteuert werden können, da das Betriebssystem die erfindungsgemäße Eingabevorrichtung von einer Computermaus nicht unterscheidet, da es genau die Signalfolgen erhält, die auch von einer Computermaus erzeugt werden. Vorteilhafterweise wird (wegen der dieselben Software-Funktionen steuernden und gleichzeitig angeschlossenen Eingabegeräte) durch die erfindungsgemäße Eingabevorrichtung, das erfindungsgemäße Eingabeverfahren sowie das erfindungsgemäße Computerprogramm die Koordination der Eingaben insbesondere durch Erzeugung von Eingabe-Prioritäten übernommen. Hierfür werden bei Verwendung mehrerer Eingabevorrichtungen wenigstens einem Teil dieser Eingabevorrichtungen - dynamisch oder statisch - Prioritätswerte zugewiesen. Beispielsweise kann einer bevorzugten Eingabevorrichtung statisch eine Master-Priorität zugeordnet werden, so dass eine Betätigung dieser Eingabevorrichtung die Eingabe durch andere Geräte blockiert. Es kann sich jedoch auch als vorteilhaft erweisen, wenn die Eingabeprioritäten derart vergeben werden, dass stets die aktuell betätigte Eingabevorrichtung den Vorrang bekommt. In anderen Situationen kann es von Vorteil sein, wenn Eingabevorrichtungen dieselbe Priorität besitzen und deren Eingabe gleichberechtigt behandelt wird, z. B. indem die Eingabewerte kumuliert werden.

Für die genaue Positionierung von Objekten auf dem GUI, wie sie beispielsweise häufig bei der Bedienung von CAD-Programmen erwünscht ist, oder die präzise Einstellung von Parameterwerten wird vorteilhafterweise ein Eingabeverfahren nach der Erfindung genutzt, wobei eine Eingabevorrichtung mit Drehregler verwendet wird, wobei durch die Betätigung des Drehreglers eine Signalfolge erzeugt wird, welche ein Betriebssystem der Datenverarbeitungseinrichtung veranlasst, die Werte der für die Positionierung eines Positionszeigers (Cursor) auf der grafischen Benutzeroberfläche genutzten Daten derart zu ändern, dass der Positionszeiger auf einer im wesentlichen linearen Bahn auf der grafischen Benutzeroberfläche bewegt wird, wenn er gemäß der für die Positionierung genutzten Daten visualisiert wird. Die Eingabevorrichtung ist dabei derart eingerichtet, dass die im wesentlichen lineare Bahn des Cursors schräg auf der grafischen Benutzeroberfläche verläuft, wobei die Signalfolge eine Signalkomponente eines ersten Freiheitsgrades und eine Signalkomponente eines zweiten Freiheitsgrades umfasst, und die im wesentlichen lineare Bahn erzeugt wird, indem die Signalkomponente des ersten Freiheitsgrades und die Signalkomponente des zweiten Freiheitsgrades zueinander in ein Verhältnis gesetzt werden, das durch einen Proportionalitätsfaktor festgelegt ist.

Ein erfindungsgemäßes Computerprogramm für ein Eingabeverfahren ermöglicht es einer Datenverarbeitungseinrichtung, nachdem es in den Speicher der Datenverarbeitungseinrichtung geladen worden ist, ein Eingabeverfahren zur Steuerung von über eine grafische Benutzeroberfläche einer Datenverarbeitungseinrichtung bedienbaren Programmen durchzuführen, wobei eine Eingabevorrichtung mit Drehregler verwendet wird und bei Betätigung des Drehreglers eine Signalfolge erzeugt wird, welche ein Betriebssystem der Datenverarbeitungseinrichtung veranlasst, die Werte der für die Positionierung eines Positionszeigers (Cursor) auf der grafischen Benutzeroberfläche genutzten Daten derart zu ändern, dass der Positionszeiger auf einer im wesentlichen linearen Bahn auf der grafischen Benutzeroberfläche bewegt wird, wenn er gemäß der für die Positionierung genutzten Daten visualisiert wird.

Die Eingabevorrichtung ist dabei derart eingerichtet, dass die im wesentlichen lineare Bahn des Cursors schräg auf der grafischen Benutzeroberfläche verläuft, wobei die Signalfolge eine Signalkomponente eines ersten Freiheitsgrades und eine Signalkomponente eines zweiten Freiheitsgrades umfasst, und die im wesentlichen lineare Bahn erzeugt wird, indem die Signalkomponente des ersten Freiheitsgrades und die Signalkomponente des zweiten Freiheitsgrades zueinander in ein Verhältnis gesetzt werden, das durch einen Proportionalitätsfaktor festgelegt ist.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 13 aus einem elektronischen Datennetz, wie beispielsweise aus dem Internet, auf eine an das Datennetz angeschlossene Datenverarbeitungseinrichtung heruntergeladen wird.

Um das erfindungsgemäße Eingabeverfahren durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Eingabeverfahren zur Steuerung von über eine grafische Benutzeroberfläche einer Datenverarbeitungseinrichtung bedienbaren Programmen durchzuführen, wobei eine Eingabevorrichtung mit Drehregler verwendet wird und bei Betätigung des Drehreglers eine Signalfolge erzeugt wird, welche ein Betriebssystem der Datenverarbeitungseinrichtung veranlasst, die Werte der für die Positionierung eines Positionszeigers (Cursor) auf der grafischen Benutzeroberflächen genutzten Daten derart zu ändern, dass der Positionszeiger auf einer im wesentlichen linearen Bahn auf der grafischen Benutzeroberfläche bewegt wird, wenn er gemäß der für die Positionierung genutzten Daten visualisiert wird.. Die Eingabevorrichtung ist dabei derart eingerichtet, dass die im wesentlichen lineare Bahn des Cursors schräg auf der grafischen Benutzeroberfläche verläuft, wobei die Signalfolge eine Signalkomponente eines ersten Freiheitsgrades und eine Signalkomponente eines zweiten Freiheitsgrades umfasst, und die im wesentlichen lineare Bahn erzeugt wird, indem die Signalkomponente des ersten Freiheitsgrades und die Signalkomponente des zweiten Freiheitsgrades zueinander in ein Verhältnis gesetzt werden, das durch einen Proportionalitätsfaktor festgelegt ist.

Die erfindungsgemäße Eingabevorrichtung, das erfindungsgemäße Eingabeverfahren sowie das erfindungsgemäße Computerprogramm sind somit in Computersysteme mit bereits bestehenden Eingabegeräten problemlos integrierbar und verbinden die ergonomischen Vorteile eines Hardware-Drehreglers mit der Universalität der Maus-Bedienbarkeit GUI-gestützter Software und vieler entsprechender Programmierungskonventionen.

### Ausführungsbeispiel

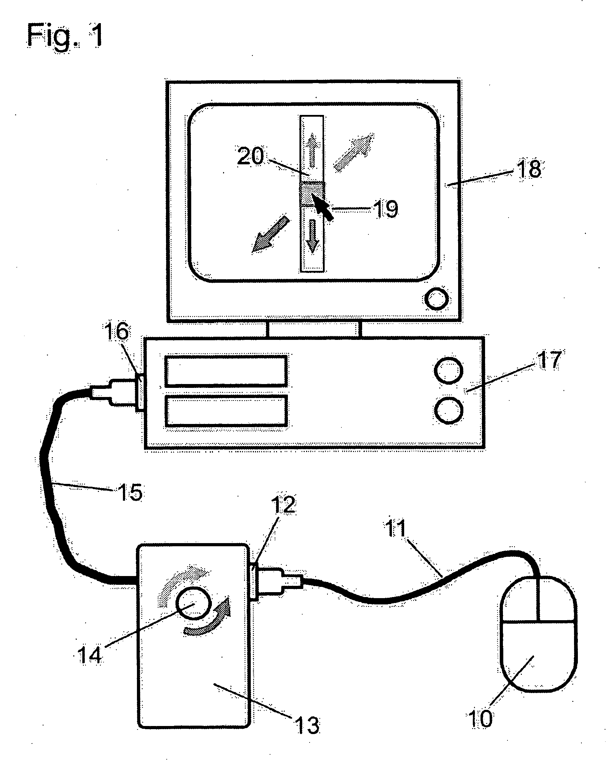

Die Erfindung wird nachfolgend unter Bezugnahme auf die Figuren der Zeichnungen an einem Ausführungsbeispiel näher erläutert. Es zeigt
- Fig. 1: eine Darstellung eines beispielhaften Einsatzes einer beispielhaften Ausführungsform der erfindungsgemäßen Eingabevorrichtung in Verbindung mit einem zweiten Eingabegerät.

Vor der Erläuterung von beispielhaften Ausführungsformen der Erfindung sollen kurz einige für die erfindungsgemäße Eingabevorrichtung relevante prinzipielle Funktionsweisen beschrieben werden. Die erfindungsgemäße Eingabevorrichtung umfasst mindestens einen Drehregler. Sie ist mit einer Firmware ausgestattet, welche die Drehbewegung des Reglers erfasst und digitalisiert. Die von der Firmware digitalisierten Signale werden über eine Schnittstelle an einen Computer, auf dem ein zu steuerndes Programm installiert ist, oder an ein zu steuerndes Gerät übertragen. Vorteilhafterweise wird bei einem Computer hierfür eine Mausschnittstelle genutzt. Die Signale werden dann in der Regel von einem Treiber verarbeitet und als Signalfolge an das Betriebssystem des Computers bzw. Gerätes übergeben.
Ein Betriebssystem ist ein Programm, das, nachdem es durch einen Bootloader initial geladen wurde, alle anderen Programme im Computer verwaltet. Diese anderen Programme werden Anwendungen genannt - Anwendungen verwenden das Betriebssystem, indem sie durch ein fest definiertes Interface (API - Application Program Interface) Dienste vom Betriebssystem anfordern. Typische Aufgaben eines Betriebssystems sind z. B.:
- Steuern des Ablaufs von Anwendungsprogrammen,
- Verwalten des Hauptspeichers,
- Regeln der Ein- und Ausgabe von Daten und
- Gewährleisten der Kommunikation mit einem oder mehreren Benutzern.

Die meisten Betriebssysteme stellen bereits für viele Peripheriegeräte Standardtreiber, einschließlich Standard-Maustreiber, zur Verfügung. Es kann sich als vorteilhaft erweisen, auch für die erfindungsgemäße Eingabevorrichtung einen solchen Standard-Maustreiber oder einen anderen installierten Treiber, welcher speziell auf ein bereits angeschlossenes Eingabegerät abgestimmt ist, zu nutzen. Das würde die Installation eines zusätzlichen Treibers ersparen. Um besondere Funktionen der erfindungsgemäßen Eingabevorrichtung verfügbar zu machen, kann es sich aber als nützlich erweisen, einen speziell an die erfindungsgemäße Eingabevorrichtung angepassten Treiber zu verwenden.

Durch die Nutzung eines Maustreibers oder Treibers, der wie ein Maustreiber mit dem Betriebssystem kommuniziert, entspricht die Signalfolge, die dieser Treiber an das Betriebssystem übergibt, einer Signalfolge, die vom Betriebssystem verarbeitet wird, um einen Mauszeiger (Cursor) auf einem angeschlossenen Bildschirm zu bewegen bzw. zu positionieren und um aufgrund von in dieser Signalfolge eingefügter Signale, welche den durch Maus-Tasten generierten Signalen entsprechen, mit dem GUI zu interagieren. Diese Signalfolge beinhaltet zur Steuerung der Mauszeiger-Bewegung eine senkrechte und eine waagerechte Komponente. Der Proportionalitätsfaktor dieser durch die erfindungsgemäße Eingabevorrichtung generierten Signal-Komponenten ist (bei konstant wirksamer Konfiguration) im wesentlichen konstant und daher die hierdurch erzeugte Mauszeiger-Bewegung im wesentlichen linear, sofern diese Mauszeiger-Bewegung überhaupt auf einem Bildschirm visualisiert wird.

Die Visualisierung dieser Signalfolgen durch die Bewegung des Mauszeigers ist im Zusammenspiel mit manchen grafischen Bedienelementen des GUI aus ergonomischen Gründen jedoch nicht erwünscht. So wird z. B. manchmal die Funktion des sogenannten "Einfrierens" des Cursors bereitgestellt. Dabei wird die aktuelle (interne) Cursor-Position, d. h. die für die Positionierung des Cursors auf der grafischen Benutzeroberfläche genutzten Daten, geändert, während der sichtbare Cursor auf der aktuellen Position verbleibt. Beim "Auftauen" des Cursors wird die aktuelle (interne) Cursor-Position auf die des sichtbaren Cursors gesetzt und anschließend der sichtbare Cursor wieder mitgeführt. Hierdurch wird dem Benutzer das auf Dauer anstrengende Augenspringen bei der kurzen Suche nach dem Mauszeiger erspart. Bei einer weiteren Einschränkung der, Visualisierung der oben beschriebenen Signalfolgen verschwindet der Mauszeiger während des "Festhaltens" eines grafischen Bedienelements ganz vom Bildschirm, um dieses optisch nicht zu verdecken. Selbstverständlich ist die Erfindung auch ohne eine Visualisierung der durch sie erzeugten Signalfolgen zur Bedienung eines GUI geeignet.

Nachfolgend wird an einer beispielhaften Ausführungsform der erfindungsgemäßen Eingabevorrichtung die Erfindung in größerem Detail erläutert. Hierbei wird am Computerarbeitsplatz ein Gerät 13 mit einem Drehregler 14 ohne Anschlag (ein sogenannter Endlos-Drehregler) rutschfest auf den Tisch z. B. links neben die Computer-Tastatur gestellt. (Mit Drehreglern sind im Folgenden sämtliche durch den Mensch durch direkten physischen Kontakt bedienbare, drehbare Teile mit Steuerwirkung gemeint, insbesondere unabhängig von der Richtung der Drehachse und der Art der Bedienung. Die Version z. B. eines sogenannten Rändelrades ist also impliziert.)

An dem Gerät 13 wird an einer hierfür vorgesehenen Schnittstelle Maus-Gerät 12 eine vorteilhafterweise handelsübliche Computermaus 10 (über die Signalleitung Maus-Gerät 11 mit Kabel oder drahtlos) angeschlossen und das Gerät 13 selbst (über die Signalleitung Gerät-Computer 15 mit Kabel oder drahtlos) mit der Schnittstelle Gerät-Computer (Mausport) 16 des zu steuernden Computers 17 verbunden, so dass die erfindungsgemäße Eingabevorrichtung sich im Signalweg zwischen Maus 10 und Computer 17 befindet. Aufgrund der Verlängerung des Signalweges zwischen Maus und Computer weist die erfindungsgemäße Eingabevorrichtung zur fehlerfreien Übertragung der Maussignale einen geeigneten Verstärker auf.

Eine bevorzugte Ausführungsform der erfindungsgemäßen Eingabevorrichtung sieht vor, dass die Eingabevorrichtung einen optischen und/oder mechanischen und/oder elektrischen Bewegungssensor umfasst, welcher eine Bewegung des Drehreglers 14 oder mit ihm (z. B. fest und/oder durch Reibungsschluss und/oder Verzahnung) verbundener beweglicher Teile (z. B. Scheiben und/oder andere rotationssymmetrische Teile, Zahnräder, Bänder, Ketten, Walzen, Zylinder, Laufbänder usw.) detektiert und hieraus eine Signalfolge generiert, aus welcher Informationen über den Drehwinkel, die Drehgeschwindigkeit und die Drehrichtung des Drehreglers abgeleitet werden können. Vorteilhafterweise werden hierfür ausgereifte Bauelemente von Computermäusen (z. B. eine Bewegungs-Detektion durch eine drehbare Schlitzscheibe, deren Schlitzöffnungen bei Drehung an zwei Lichtschranken vorbei geführt werden oder einen bei optischen Mäusen üblichen CCD-Sensor (Charge-coupled Device)) verwendet, was den Entwicklungsaufwand minimiert.

Diese Signalfolge wird digitalisiert und dann an einen Controller übergeben, welcher diese entsprechend der hierfür vorgesehenen (im Gerät 13 jeweils fest abgespeicherten und aufrufbaren und/oder durch den Benutzer editierbaren, abspeicherbaren und aufrufbaren) Konfigurationen der erfindungsgemäßen Eingabevorrichtung verarbeitet, Bewegungs- und/oder Tasten-Signale (insbesondere der Hauptselektions-Tasten), die denen der angeschlossenen Computermaus entsprechen, generiert und dann an die Schnittstelle Gerät-Computer (Mausport) 16 des Computers 17, auf dem ein zu steuerndes Programm installiert ist, weiterleitet.

In einer bevorzugten Ausführungsform weist die erfindungsgemäße Eingabevorrichtung drei Funktions-Modi auf:
■ Normal-Modus: Das Gerät ist bezüglich der eigenen Signal-Generierung deaktiviert. Die Signale der Computermaus 10 werden vollständig und unverändert durch das Gerät durchgeführt und steuern wie gewohnt den Computer.
■ Arbeits-Modus: Die Signale der Maus 10, welche durch die Bewegung der Maus 10 und ihre Tasten und sonstigen Bedienelemente generiert werden, werden ganz oder teilweise herausgefiltert und nicht an den Computer 17 weitergegeben. Vorteilhafterweise werden alle anderen gerätespezifischen Signale der Maus 10 (z. B. für das sogenannte "Plug and Play" relevante Daten) unverändert an den zu steuernden Computer 17 weitergegeben, so dass der Computer 17 die Maus 10 weiterhin als einzige an der Schnittstelle Gerät-Computer (Mausport) 16 angeschlossene Eingabevorrichtung erkennt. Die erfindungsgemäße Eingabevorrichtung erzeugt (abhängig von der aktuell wirksamen Konfiguration) Signale, welche denen entsprechen, die die angeschlossene Maus 10 bei Bewegung und/oder Drücken, Halten und Loslassen ihrer Tasten (insbesondere der Hauptselektions-Taste) erzeugt, und gibt diese an Stelle der herausgefilterten von der Maus 10 erzeugten Signale an die Schnittstelle Gerät-Computer (Mausport) 16 des zu steuernden Computers 17 weiter.
■ Konfigurations-Modus: Es können zur funktionellen und ergonomischen Optimierung sowie zur Anpassung an die angeschlossene Maus 10, den zu steuernden Computer und der darauf installierten Software Einstellungen vorgenommen und abgespeichert werden, die die Signalerzeugung und deren zeitlichen Ablauf, den Signalfluss, den Wechsel zwischen den Funktions-Modi (insbesondere Normal- und Arbeits-Modus), die Kompatibilität der angeschlossenen Geräte und den Wechsel zwischen den Konfigurationen selbst betreffen. Unterschiedliche editierbare oder fest abgespeicherte Konfigurationen sind aufrufbar. Wie in den anderen Funktions-Modi erkennt der Computer 17 die angeschlossene Maus 10 als einzige an der Schnittstelle Gerät-Computer (Mausport) 16 angeschlossene Eingabevorrichtung.

In einer bevorzugten Ausführungsform der erfindungsgemäßen Eingabevorrichtung weist diese eine Analysefunktion auf, welche die von der angeschlossenen Maus 10 zum Zwecke ihrer Identifizierung durch den zu steuernden Computer bereitgestellten ("Plug and Plan"- relevanten) Daten auswerten kann. Nach dem Abgleich dieser Daten mit einem aktualisierbaren Gerätetyp-Archiv erfolgt eine Identifizierung des angeschlossenen Maustyps. Ist diese Identifizierung nicht möglich, weist die erfindungsgemäße Eingabevorrichtung bei Bedarf im Konfigurations-Modus zusätzlich eine Lernfunktion auf, welche Bewegungs- und Tasten-Signale und/oder das unterstützte Datenformat der angeschlossenen Maus 10 analysieren kann. Der erfindungsgemäßen Eingabevorrichtung stehen damit die benötigten Informationen zur Verfügung, um die Signale der angeschlossenen Maus, 10 durch die Generierung des gleichen Signal-Typs ersetzen zu können. Durch eine solche Analyse- und Lernfunktion wird die Kompatibilität der erfindungsgemäßen Eingabevorrichtung gesichert, wenn z. B. bezüglich der durch die angeschlossene Maus 10 generierten und den Computer 17 steuernden Signale nicht eindeutige Standards umgesetzt wurden. Vorteilhafterweise besteht somit kein zusätzlicher Software-Anpassungsbedarf, da die Gesamtheit der Signale, welche an den zu steuernden Computer 17 in allen Funktions-Modi weitergegeben werden, der Gesamtheit der ausschließlich durch die angeschlossene Maus 10 generierten Signale entspricht. Vorteilhafterweise wird hierdurch der zu steuernde Computer 17 in keiner Weise (gegenüber einer Mauszeiger-Steuerung allein durch die Maus 10) zusätzlich belastet, da das Gerät durch das Herausfiltern der entsprechenden Maus-Signale im Arbeits-Modus und durch das unveränderte Durchführen im Normal-Modus auch die Verwaltung der Mauszeiger-Steuerungs-Priorität und damit die Koordination der Eingaben durch Maus 10 und erfindungsgemäßer Eingabevorrichtung übernimmt.

Der Wechsel vom Normal-Modus in den Arbeits-Modus erfolgt bevorzugt durch Drehbetätigung des Drehreglers 14. Vorteilhafterweise wird der Benutzer über den aktuellen FunktionsModus (insbesondere den Arbeits-Modus) durch entsprechende Anzeigen (z. B. LEDs unterschiedlicher Farben) informiert.

Am Anwendungsbeispiel des computerbasierten Tonstudios soll die Funktionsweise der erfindungsgemäßen Vorrichtung in einer hierfür angepassten Konfiguration im Zusammenspiel mit den grafischen Bedienelementen des GUI näher betrachtet werden. Es sind natürlich in gleicher Weise auch beliebig andere Einsatzbereiche der Erfindung denkbar, wie beispielsweise Video-Bearbeitungsprogramme, Grafik- und CAD-Programme, Virtual, Hybrid oder Augmented Reality, Computerspiele oder die Fernsteuerung von Geräten, wie z. B. Maschinen der industriellen Produktion, Robotern, Lichtanlagen, Klimaanlagen usw.

Als GUI in einem computerbasierten Tonstudio findet man grafische Nachbildungen von Mischpulten, Effektgeräten, Klangerzeugern usw. Die zahlreichen Parameter dieser virtuellen Geräte werden meistens über virtuelle Regler auf dem GUI verändert. Diese können in den meisten Fällen mit dem Mauszeiger "angefahren" werden, durch Drücken und Halten der Hauptselektionstaste, der häufig so genannten "linken Maustaste", "festgehalten" und dann durch die Mausbewegung verändert werden. Mit dem_Loslassen der. Maustaste wird der Mauszeiger vom virtuellen Regler wieder abgekoppelt. Zudem gibt es auch Parameter-Felder, in denen der Parameter-Wert numerisch eingetragen ist, bei denen der Wert in gleicher Weise durch "Festhalten" des Feldes und Bewegung der Maus verändert wird, ohne dass dabei ein sich bewegender virtueller Regler auf dem Bildschirm visualisiert wird.

Hierbei ist im Zusammenspiel mit dem Ausführungsbeispiel der erfindungsgemäßen Eingabevorrichtung und deren Konfiguration eine bei der Bedienungs-Programmierung solcher virtuellen Regler dominierende Konvention von entscheidender Bedeutung: Virtuelle Regler auf einer grafischen Bedienoberfläche sind aus ergonomischen Gründen meist so programmiert, dass sie (nachdem sie durch Drücken und Halten der Hauptselektions-Taste der Maus "festgehalten" wurden) mit einer linearen Mauszeiger-Bewegung über ihren gesamten Wertebereich eingestellt werden können und dabei nur die Komponente der Mauszeiger-Bewegung in Richtung der Regelbewegung (je nach Typ des virtuellen Reglers meist senkrecht oder waagerecht) berücksichtigt wird.

Dabei wird bei virtuellen Reglertypen mit senkrechter Regelrichtung der Parameterwert durch eine Mauszeiger-Bewegung normalerweise nach oben erhöht und nach unten verringert, bei Reglertypen mit waagerechter Regelrichtung wird der Parameterwert durch eine Mauszeiger-Bewegung nach rechts erhöht und nach links verringert. Durch die Konvention, bei Betätigung von Drehreglern im Uhrzeigersinn den Wert der zugeordneten Funktion zu erhöhen (z. B. Lautstärkeregler), ergibt sich eine bevorzugte Konfiguration des Gerätes 13 für die Richtung der Mauszeiger-Bewegung: Bei Betätigung des Drehreglers 14 der Erfindung im Uhrzeigersinn wird eine im wesentlichen lineare Bewegung des Mauszeigers 19 auf dem Bildschirm 18 des zu steuernden Computers 17 von links unten nach rechts oben generiert und umgekehrt gegen den Uhrzeigersinn von rechts oben nach links unten.

Die so erzeugte diagonale Bewegung des Mauszeigers 19 hat entsprechend Vektorkomponenten in senkrechter und waagerechter Richtung und ist somit geeignet, nahezu alle Typen virtueller Regler über den gesamten Wertebereich zu verändern.

Im Zusammenspiel mit dem Ausführungsbeispiel der erfindungsgemäßen Eingabevorrichtung ergibt sich eine weitere besondere Eignung der virtuellen Regler aus der ebenfalls dominierenden Programmierungskonvention, dass das "Festhalten" des grafischen Bedienelementes bei beliebig großer Entfernung des Mauszeigers 19 von eben diesem "festgehaltenen" grafischen Bedienelement aufrecht erhalten bleibt.

Das wie beschrieben mit Maus 10 und Computer 17 in Reihe verbundene Gerät 13 wird im normalen Arbeitsbetrieb mit nur einem Element, dem Drehregler 14 ohne Anschlag, bedient. Im hier beschriebenen Anwendungsbeispiel bedient der Benutzer die Maus 10 mit der rechten Hand und den Drehregler 14 mit der linken.
Im Normal-Modus des Gerätes 13 wird das Signal der Maus unverändert durch das Gerät 13 durchgeführt und steuert wie gewohnt den Computer 17. Bedienungsschritte wie z. B. die Grobpositionierung des Mauszeigers 19, Wechsel zwischen Programm-Fenstern oder Betätigung von virtuellen Schaltern auf dem GUI können mit der universellen Maus 10 optimal vollzogen werden.

Sobald das Gerät 13 eine Drehbewegung des Drehreglers 14 detektiert, wechselt es in den Arbeits-Modus. Es unterbricht nun den Teil des Signalflusses zwischen Maus 10 und Computer 17, welcher zur Bewegungssteuerung des Mauszeigers 19 und zur Selektion grafischer Bedienelemente dient. Während der Drehbewegung gibt das Gerät 13 gleichzeitig ein Signal an den Computer 17, das dem Festhalte-Signal entspricht, welches die angeschlossene Maus beim Drücken und Halten ihrer Hauptselektionstaste, der (beim PC) so genannten linken Maustaste, erzeugt. Die weitere Drehbewegung des Endlos-Drehreglers 14 erzeugt nun ein Signal, durch das eine Bewegung des Mauszeigers 19 diagonal zur x-Komponente (waagerecht) und y-Komponente (senkrecht) des Bildschirms 18 entsteht, und zwar von links unten nach rechts oben, wenn der Drehregler 14 im Uhrzeigersinn gedreht wird, bei Betätigung entgegen dem Uhrzeigersinn entsprechend in entgegengesetzter Richtung. Wird eine Taste der Maus 10 irgendwann betätigt, so kehrt das Gerät 13 beim Loslassen der Maustaste gleichzeitig in den deaktivierten Normal-Modus zurück, leitet also die Maussignale nun wieder unverändert an den Computer 17 weiter. Sollte bei der nun den Computer steuernden Maus keine Taste mehr gedrückt sein, wird dementsprechend gleichzeitig auch das "Festhalte"-Signal aufgehoben.

Es sollen nun im Folgenden verschiedene auf dem GUI dargestellte, virtuelle Reglertypen und deren Steuerbarkeit mit dem im Anwendungsbeispiel beschriebenen Gerät 13 und dessen Konfiguration betrachtet werden.

### 1. Virtueller senkrechter Schieberegler 20

Der Benutzer bewegt im Normal-Modus den Mauszeiger 19 mit Hilfe der Maus 10 in gewohnter Weise zum grafisch dargestellten, virtuellen Schieberegler 20 und positioniert ihn über dessen Selektionsbereich. Dreht er nun den Drehregler 14 des Gerätes 13, bewegt sich der virtuelle senkrechte Schieberegler 20 sofort je nach Drehrichtung auf oder ab, da dieser bei der ersten Bewegung des Drehreglers 14 durch das Festhalte-Signal sofort "angefasst" und durch die weitere Bewegung des Drehreglers 14 "geschoben" wird. Dabei wird in fast allen Fällen softwareseitig nur die senkrechte Komponente der durch das Gerät erzeugten diagonalen Bewegung des Mauszeigers 19 berücksichtigt, und der virtuelle Schieberegler 20 bleibt bei fortbestehendem Festhalte-Signal auch steuerbar, wenn der Mauszeiger den Selektionsbereich des virtuellen Schiebereglers 20 verlässt.

Ist der Steuervorgang beendet, wird mit dem Drücken und Loslassen einer Maustaste der virtuelle Schieberegler 20 wieder "losgelassen", das Gerät 13 kehrt gleichzeitig in den Normal-Modus zurück und die - zuvor durch das Gerät 13 während des Arbeits-Modus' vom Computer 17 abgekoppelte Maus 10 arbeitet wieder in gewohnter Weise.

### 2. Virtueller waagerechter Schieberegler

Die Funktionsweise entspricht hier dem des senkrechten virtuellen Schiebereglers 20 mit dem Unterschied, dass hier nur die waagerechte Komponente der Bewegung des Mauszeigers 19 für die Steuerung des Schiebereglers den Ausschlag gibt.

### 3. Virtueller Drehregler

Die Funktionsweise entspricht (in den meisten Fällen) aus ergonomischen Gründen dem des senkrechten virtuellen Schiebereglers 20: die senkrechte Komponente der (durch den Drehregler des Gerätes erzeugten diagonalen) Mauszeiger-Bewegung bewirkt jedoch eine entsprechende Drehbewegung des virtuellen Drehreglers.

### 4. Grafische Flächen mit numerischen Parameter-Werten

Solche virtuellen Regler werden in gleicher Weise bedient wie die virtuellen senkrechten 20 und waagerechten Schieberegler mit dem Unterschied, dass sich hier nur der im grafischen Feld eingetragene Parameter-Wert verändert, ohne dass ein grafischer Regler bewegt wird. Derartige Flächen werden häufig auch so programmiert, dass sich nach dem "Festhalten" der Fläche, also Drücken und Halten der Hauptselektionstaste, wenn sich der Mauszeiger 19 über der Fläche befindet, der Mauszeiger 19 nicht mehr bewegt, sondern sich mit der Bewegung der Maus 10 nur der Wert verändert, der Mauszeiger 19 also bis zum Loslassen der linken Maustaste "einfriert". Diese Programmierungsart korrespondiert hervorragend mit der beschriebenen Erfindung, da auch hier nur noch der Wert verändert wird ohne eine visualisierte Diagonalbewegung des Mauszeigers 19. Nach der "Entkopplung" von Mauszeiger 19 und Parameterfläche ist der Mauszeiger 19 genau an der Stelle, wo er "eingefroren" war, was der schnellen Wahrnehmung der Position des Mauszeigers 19 förderlich ist, da die Augen auf der Suche nach dem Mauszeiger 19 nicht hin und her springen müssen.

Mit diesen virtuellen Reglertypen sind die meisten grafischen Umsetzungen von Steuerelementen zur kontinuierlichen Parameterveränderung im computerbasierten Tonstudio beschrieben. Derartige Reglertypen finden sich auch in überragender Verbreitung in anderen Computerprogrammen. Ein Beispiel hierfür sind virtuelle Schieberegler, mit denen Farbwerte eingestellt werden. Auch Bildlauf-Leisten, Positionslinien auf der Zeitachse von Audio-Sequenzer- und Videobearbeitungs-Programmen können mit dem Gerät 13 bedient werden. Dabei spielen die waagerechte und senkrechte Bewegungskomponente des Mauszeigers 19 die wesentliche Rolle, es gibt jedoch auch ausschließlich diagonal zu bewegende grafische Bedienelemente. Ein Beispiel hierfür sind in Grafikprogrammen häufig vorkommende Bearbeitungspunkte zum proportionserhaltenden Vergrößern und Verkleinern von grafischen Objekten. Diese Bearbeitungspunkte erscheinen bei geeigneter Auswahl des Objektes an den Ecken eines das Objekt umschließenden Rechtecks. Diese Punkte können nun durch die Maus 10 "festgehalten" und in Richtung der den "festgehaltenen" Punkt durchlaufenden Diagonalen des Rechteckes verschoben werden, wobei wiederum nur die Bewegungskomponente des Mauszeigers 19 in Richtung dieser Diagonalen den Ausschlag gibt.

Dessen ungeachtet ist die erfindungsgemäße Eingabevorrichtung auch dann von Nutzen, wenn die beschriebenen Bedienungs-Eigenschaften der grafischen Bedienelemente nicht in Gänze (oder sogar überhaupt nicht) gegeben sind, z. B. beim präzisen Drehen von Objekten in Grafikprogrammen. Die entsprechenden Bearbeitungspunkte können hier meist zweidimensional in einer Kreisbahn bewegt werden, wobei hier die Bewegungskomponente des Mauszeigers 19 in Richtung der den Bearbeitungspunkt durchlaufenden Tangente dieser Kreisbahn berücksichtigt wird. Präzise Teildrehungen können somit auch mit der erfindungsgemäßen Eingabevorrichtung erzielt werden.

Durch das beschriebene Anwendungsbeispiel der Erfindung erhält man eine haptisch-sensorische und feinmotorische Kontrolle über diese virtuellen Regler, die der einer Maus 10 weit überlegen ist. Dabei kann für normale Eingaben wie gewohnt die Computermaus 10, für Präzisionseingaben die erfindungsgemäße Eingabevorrichtung genutzt werden. Durch einerseits die Zusammenfassung der Erlangung der Eingabepriorität (durch Abkopplung der Maus-Signale), der Erzeugung des simulierten Maustasten-Signals (Drücken und Halten der Hauptselektions-Taste) sowie der simulierten Mausbewegungs-Signalfolge in nur einem Bedienungsschritt (der Drehbetätigung des Drehreglers 14), sowie andererseits der einfach per Mausklick ohne jedes Umgreifen möglichen Rückkehr in den Normal-Modus ergibt sich ein extrem effizienter Arbeitsfluss. Die minimalistische Ausführung des Gerätes 13 mit nur einem Bedienelement und die intuitiv sofort verständliche Funktionsweise gewährleisten kürzeste Eingewöhnungszeiten. Der Benutzer braucht den Blick kaum noch ungewollt vom Bildschirm 18 abzuwenden, wenn er mit einer Hand die Maus 10 bedient und mit der anderen den Endlos-Drehregler 14. Er braucht im Tonstudiobereich auch nicht wie z. B. häufig bei großen Hardware-Controller-Mischpulten nötig, die optimale Abhörposition, den so genannten "Sweet Point", zu verlassen, um einen ergonomisch günstigen, aber bei Einnahme dieser eng definierten Position nicht erreichbaren Regler zu bedienen.

Darüber hinaus erfordert das Gerät 13 vorteilhafterweise keine zusätzliche spezielle Software-Anpassung der zu steuernden Programme, sofern diese, wie zurzeit ausnahmslos üblich, über eine Computermaus 10 bedient werden können, und ist daher weitaus universeller einsetzbar als auf bestimmte Programme spezialisierte Eingabevorrichtungen. Es entfallen somit auch aufwendige Entwicklungskosten.

Im Folgenden sollen Spezifizierungen und Varianten der oben beschriebenen Ausführungsform und weitere in der Zeichnung nicht dargestellte Ausführungsformen der erfindungsgemäßen Anordnung und/oder des erfindungsgemäßen Verfahrens und/oder Computerprogramms beschrieben werden.
- Grundsätzliche Ausführungsformen sind hierbei:
   ■ Eine Ausführung als eigenständiges Gerät hat den Vorteil, dass dieses in bestehende Hardware-Setups integriert werden kann, ohne bereits bestehende Hardware, wie z. B. Maus oder Tastatur in Verbindung mit der erfindungsgemäßen Vorrichtung zusätzlich neu anschaffen zu müssen.
   ■ Eine Ausführung als eigenständiges Gerät mit zusätzlich bereits (fest per Kabel oder drahtlos) angeschlossener Maus oder funktionell ähnlicher Eingabevorrichtung (z. B. Trackball, Touchpad, Joystick usw.) hat den Vorteil, dass die beiden Eingabevorrichtungen aufeinander abgestimmt werden können, was z. B. den Konfigurierungs-Aufwand minimiert.
   ■ Eine Unterbringung in anderen Gehäusen, wie beispielweise Computertastaturen, Computergehäusen, Trackball-Gehäusen, Joystick-Gehäusen, Touchpad-Gehäusen, Sende- und Empfangsgeräten zur drahtlosen Signalübertragung, Geräten und Gehäusen zur Verteilung, Umleitung und Verlängerung der Signalleitungen von Ein- und Ausgabegeräten, Laptops, Grafiktabletts, Midi-Tastaturen, konventionellen Hardware-Controllern (Audio, Video), Mischpulten, Monitoren, Druckern, Spiele-Konsolen und Maschinenund Anlagensteuerungsgeräten, sowie in Tischen, Stühlen (Armlehnen) und sonstigen Möbeln des Computer- bzw. Maschinensteuerungs-Arbeitsplatzes. Eine Unterbringung in einem Mausgehäuse ist ebenfalls denkbar, hätte jedoch wegen der Beweglichkeit der Maus Nachteile bezüglich einer definierten Haptik des Drehreglers, wenn dieser nicht als Rändelrad ausgeführt ist.
      In einer bevorzugten Ausführungsform wird die erfindungsgemäße Vorrichtung in einer Computertastatur untergebracht. Bei neueren Computer-Schnittstellen zum Anschluss von Eingabevorrichtungen (z. B. USB) können Maus- und Tastatur-Signale über dieselbe Schnittstelle den Computer steuern. Es bietet sich daher an, eine Maus an einer Computertastatur, in welcher die erfindungsgemäße Vorrichtung untergebracht ist, anzuschließen und diese Tastatur mit dem Computer zu verbinden. Diese Lösung benötigt vorteilhafterweise am Arbeitsplatz kaum zusätzlichen Raum und minimiert die Verkabelung. Zudem können hier einzeln oder in Kombination betätigte Tasten zum Aufrufen unterschiedlicher Konfigurationen der erfindungsgemäßen Vorrichtung verwendet werden (z. B. bei Betätigung der Umschalt-Taste nur senkrechte Cursor-Bewegung, bei Betätigung der Strg-Taste nur waagerechte Cursor-Bewegung, bei Betätigung der Alt-Taste Verringerung der Cursor-Geschwindigkeit, bei Betätigung der Umschalt-Taste in Kombination mit der Alt-Taste senkrechte verlangsamte Cursor-Bewegung, usw.).
   ■ Eine Ausführung, bei welcher das Betriebssystem des zu steuernden Computers die erfindungsgemäße Vorrichtung nicht als zusätzliche Eingabevorrichtung erkennt und die erfindungsgemäße Vorrichtung ausschließlich Signale bereits vorhandener Eingabevorrichtungen durch den selben Signaltyp ersetzt.
   ■ Eine Ausführung, bei welcher die erfindungsgemäße Vorrichtung durch eine Firmware Informationen bereitstellt und an den zu steuernden Computer weiterleitet, mit deren Hilfe das Betriebssystem die erfindungsgemäße Vorrichtung als zusätzliche Eingabevorrichtung (vorzugsweise als Maus oder ähnliches) identifizieren kann, um beispielsweise einen entsprechenden Treiber zu suchen.
   ■ Eine Ausführung, bei welcher die erfindungsgemäße Vorrichtung im Signalweg zwischen der Maus (oder einer funktionell ähnlichen Eingabevorrichtung s.o.) und dem Computer liegt.
   ■ Eine Ausführung, bei welcher die erfindungsgemäße Vorrichtung im Signalweg parallel zur Maus (oder einer funktionell ähnlichen Eingabevorrichtung s. o., welche auch, wie z. B. bei Laptops üblich, in das Gehäuse des zu steuernden Computers eingebaut sein kann) an den zu steuernden Computer angeschlossen ist.
   ■ Eine Ausführung, bei welcher eine der erfindungsgemäßen Vorrichtung angepasste Software, wie z. B. Treiber oder Konfigurationsprogramme, zusätzlich auf dem zu steuernden Computer installiert wird.
   ■ Eine Ausführung, bei welcher die erfindungsgemäße Vorrichtung ohne eigene zusätzlich auf dem zu steuernden Computer zu installierende Software funktioniert und z. B. bestehende und bereits installierte Treiber und/oder Konfigurationsprogramme nutzt.
   ■ Eine Ausführung, bei der das erfindungsgemäße Eingabeverfahren und/oder Computerprogramm auf mindestens einen bereits bestehenden, am zu steuernden Computer an beliebiger Schnittstelle angeschlossenen oder in dessen Hardware integrierten Endlos-Drehregler zurückgreift und diesem durch eine entsprechende Treiber- und/oder Konfigurations-Software eine erfindungsgemäße Steuerung der auf dem Computer installierten Software ermöglicht.
   ■ Eine Ausführung, bei welcher die erfindungsgemäße Vorrichtung selbst die Eingaben bezüglich der Mauszeiger-Steuerung durch mehrere Eingabevorrichtungen (z. B. Maus und erfindungsgemäße Vorrichtung) bevorzugt durch ganze oder teilweise Unterbrechung des Signalflusses und/oder Deaktivierung koordiniert.
   ■ Eine Ausführung, bei welcher der zu steuernde Computer die Eingaben zur Mauszeiger-Steuerung durch mehrere Eingabevorrichtungen koordiniert.
   ■ Eine Ausführung, bei welcher die erfindungsgemäße Vorrichtung selbst die Konfiguration der erfindungsgemäßen Vorrichtung bezüglich Editierung, Speicherung und Aufruf verwaltet und durch entsprechende Anzeigen darstellt.
   ■ Eine Ausführung, bei welcher der zu steuernde Computer die Konfiguration der erfindungsgemäßen Vorrichtung bezüglich Editierung, Speicherung und Aufruf verwaltet und durch den Computer-Bildschirm darstellt.
   ■ Eine Ausführung, bei welcher die erfindungsgemäße Vorrichtung und der zu steuernde Computer die Konfiguration der erfindungsgemäßen Vorrichtung bezüglich Editierung, Speicherung und Aufruf in Aufgabenteilung verwalten und darstellen (erfordert eine bidirektionale Schnittstelle wie z. B. USB).
- Eine Ausführung mit mehreren Drehreglern, denen jeweils unterschiedliche Konfigurationen zugewiesen werden können und deren Priorität bzgl. der Steuerung der Software-Funktionen durch die erfindungsgemäße Vorrichtung, das erfindungsgemäße Eingabeverfahren sowie das erfindungsgemäße Computerprogramm eindeutig zugewiesen wird.
- Eine Ausführung, bei der die im Arbeits-Modus aufgerufene Konfiguration abhängig ist von der Mauszeiger-Position auf dem GUI zum Zeitpunkt des Wechsels in den Arbeits-Modus. Hierbei könnten unterschiedliche Konfigurationen (z. B. bzgl. der Zeigergeschwindigkeit) unterschiedlichen grafischen Bedienelementen zugeordnet werden.
- Eine Ausführung, an der sich individuelle haptischergonomische Anpassungen vornehmen lassen, insbesondere:
   ■ Eine Auswechselbarkeit des Drehknopfes, um Drehknöpfe mit unterschiedlichen Größen, Formen, Oberflächenstrukturen, Materialien und Gewichten verwenden zu können.
   ■ Eine Verstellbarkeit des mechanischen Dreh-Widerstandes bzw. der Dämpfung der Drehbewegung
   ■ Eine Verstellbarkeit des Drehachsenwinkels
   ■ Eine Verstellbarkeit und/oder Auswechselbarkeit einer Handauflage, wodurch unterschiedliche Größen, Formen, Positionen (Höhen, Winkel), Oberflächenmaterialien und Konsistenzen (z. B. hart, weich, elastisch usw.) der Handauflage realisiert werden können.
   ■ Eine Verstellbarkeit der Position (Höhen, Winkel) des Gesamtgerätes
- Eine Ausführung, bei der das Gerät (abschaltbare) Leuchtelemente aufweist, um eine schnelle optische Orientierung an einem abgedunkelten Arbeitsplatz zu gewährleisten.
- Eine Ausführung, bei der sich der Drehknopf des Drehreglers vom Rest der erfindungsgemäßen Eingabevorrichtung abnehmen oder darin versenken lässt, ohne dass anschließend der Drehknopf, eine Achse oder andere Teile vom Rest der erfindungsgemäßen Eingabevorrichtung stark überstehen. In dieser Ausführungsform ließe sich die erfindungsgemäße Eingabevorrichtung problemlos z. B. auch in Laptops unterbringen. Der Drehknopf ließe sich z. B. in eine Vertiefung in Richtung der Rotationsachse einstecken und aus dieser wieder herausnehmen oder durch Druck in Achsrichtung versenken und einrasten bzw. wieder ausrasten und durch eine entsprechende Federung empor holen.
- Die Methode des Wechsels in den Konfigurations-Modus, des Wechsels zwischen den einzelnen Menüpunkten des Konfigurations-Modus', der Einstellung der jeweiligen Menüpunkte und des Wechsels zurück in den Normal- oder Arbeits-Modus hängt stark davon ab, ob die erfindungsgemäße Eingabevorrichtung in der Eingabevorrichtung selbst (mit entsprechenden Anzeigen) oder auf dem zu steuernden Computer mit einer entsprechenden Software (auf dem Bildschirm) konfiguriert wird. Es bieten sich hierfür als Bedienelemente z. B. ein oder mehrere zusätzliche Tasten/Schalter an der erfindungsgemäßen Eingabevorrichtung und dessen Drehregler, sowie die Maus und die Computer-Tastatur jeweils auch in Kombination an. Für die Konfigurierung der Signaltypen und die Tastenbelegung kann eine entsprechende Lernfunktion den Anwender unterstützen.
- Im Konfigurations-Modus können folgende Einstellungen ganz oder teilweise editiert, abgespeichert und aufgerufen werden:
   1. Konfiguration des Wechsels aus dem Normal-Modus in den Arbeits-Modus:
      1.1. Sofort, sobald eine Drehregler-Bewegung detektiert wird (bevorzugt)
      1.2. Verzögert, wenn der Drehregler einen geringen (evtl. definierbaren) Drehwinkel vollzogen hat, um das Risiko eines unbeabsichtigten Wechsels in den Arbeits-Modus zu minimieren.
      1.3. Die Option eines Wechsels in den Arbeits-Modus wird abgeschaltet, um einen unbeabsichtigten Wechsel in den Arbeits-Modus vollkommen zu verhindern, wenn die erfindungsgemäße Eingabevorrichtung nicht benötigt wird.
      1.4. Aktivierbare Option, welche einen Wechsel vom Normal-Modus in den Arbeits-Modus erst dann ermöglicht, wenn seit dem letzten Wechsel in den Normal-Modus mindestens einmal (für eine definierbare Zeit) keine Drehregler-Bewegung detektiert wurde, der Drehregler also still stand. Hierdurch wird verhindert, dass bei einem Wechsel vom Arbeits-Modus in den Normal-Modus während einer (Rest-) Drehregler-Bewegung die erfindungsgemäße Eingabevorrichtung sofort wieder ungewollt in den Arbeits-Modus zurück wechselt (aktiviert bevorzugt).
   2. Konfiguration des Arbeits-Modus':
      2.1. Gleichzeitige Generierung von Bewegungssignalen und Festhalte-Signal zum virtuellen "Festhalten" von z. B. virtuellen Reglern und deren Veränderung in einem Arbeitsgang (bevorzugt)
      2.2. Ausschließliche Generierung von Bewegungssignalen zur bloßen exakten Positionierung des Mauszeigers
      2.3. Ausschließliche Generierung vom Festhalte-Signal
      2.4. Regler-Empfindlichkeit: Proportionalitätsfaktor Drehwinkel des Drehreglers zu Mauszeiger-Auslenkung, welche durch die generierten Bewegungssignale (bei einheitlicher Drehgeschwindigkeit) erzielt wird: Dieser oft als Zeigergeschwindigkeit bezeichnete Proportionalitätsfaktor kann für eine funktionelle Nutzung des Drehreglers durchaus von der für die Maus gewünschten Zeigergeschwindigkeit abweichen. Es bietet sich daher an, dass der Grad der simulierten Maus-Auslenkung bei gleichem Drehwinkel des Drehreglers eingestellt werden kann.
      2.5. Möglichkeit einer Veränderung (vorzugsweise Erhöhung) des o. g. zuvor eingestellten Proportionalitätsfaktors bei schnellerer Drehregler-Bewegung, wobei unterschiedlichen (evtl. definierbaren) Drehregler-Geschwindigkeiten unterschiedliche (evtl. definierbaren) Proportionalitätsfaktoren zugewiesen werden und so eine Skalierung der vom Drehregler erzeugten Signalfolgen in Abhängigkeit der Drehgeschwindigkeit des Drehreglers erfolgt. Eine solche Erhöhung des Proportionalitätsfaktors bei schneller Eingabe-Bewegung wird häufig bereits von Seiten des Betriebssystems oder eines Treibers für Mäuse und ähnliche Eingabevorrichtungen umgesetzt. Es kann daher auch sinnvoll sein, zur steten Erhaltung des Proportionalitätsfaktors diese Erhöhung des Proportionalitätsfaktors bei der Signalverarbeitung durch eine entsprechende Verringerung des Proportionalitätsfaktors bei der Signalerzeugung durch die erfindungsgemäße Eingabevorrichtung zu kompensieren. Zudem kann natürlich auch ein speziell für die erfindungsgemäße Eingabevorrichtung vorgesehener Treiber diese Veränderungen des Proportionalitätsfaktors seitens des Betriebssystems unterbinden.
      2.6. Steigung und Richtung der im wesentlichen linearen Mauszeiger-Bewegung:
         2.6.1. Einstellung des Proportionalitätsfaktors der direkt proportionalen Signalkomponenten, welche die x-Komponente (waagerecht) und y-Komponente (senkrecht) der Mauszeiger-Bewegung bestimmen.
         2.6.2. Einstellung der Funktion, ob die bei Drehregler-Betätigung im Uhrzeigersinn oder gegen den Uhrzeigersinn generierten Signalkomponenten waagerechte Mauszeiger-Bewegungs-Komponenten von links nach rechts oder umgekehrt bzw. senkrechte Mauszeiger-Bewegungs-Komponenten von unten nach oben oder umgekehrt erzeugen. Diese Einstellung kann durch eine Vorzeichen-Änderung einer oder beider Signalkomponenten umgesetzt werden.

         Zur Verdeutlichung werden bei folgenden Einstellungsbeispielen die Steigung und die Richtung der Mauszeiger-Bewegung bei Drehregler-Betätigung im Uhrzeigersinn beschrieben. Bei Drehregler-Betätigung gegen den Uhrzeigersinn kehrt sich natürlich auch die Mauszeiger-Bewegungsrichtung entsprechend um.
- Proportionalitätsfaktor 1 zu 0: waagerecht von links nach rechts (nicht von der Deauspruchten Erfindung umfasst)
- Proportionalitätsfaktor 0 zu -1: senkrecht von oben nach unten (nicht von der Deauspruchten Erfindung umfasst)
- Proportionalitätsfaktor 1 zu 1: 45 Grad zur x-Achse von links unten nach rechts oben (bevorzugt).
- Proportionalitätsfaktor -1 zu -1: 45 Grad zur x-Achse von rechts oben nach links unten
- Proportionalitätsfaktor 4 zu -3: ca. 37 Grad zur x-Achse von links oben nach rechts unten

Anwendungsbeispiele sind das präzise rein waagerechte oder senkrechte Verschieben von grafische Objekten oder - bei Auswahl eines entsprechenden Software-Tools - das präzise Zeichnen von waagerechten, senkrechten oder diagonalen Linien in Grafik- und CAD-Programmen.

Darüber hinaus sind natürlich auch durch die Drehbewegung des Drehreglers erzeugte ganz oder teilweise nicht lineare Bewegungen des Positionszeigers denkbar, wie z.B. Spiral- oder Kreisbewegungen oder Bewegungsabläufe, welche zuvor fest oder (z.B. über eine Lernfunktion) editierbar abgespeichert wurden oder Bewegungsabläufe, welche aus mehreren linearen und/oder nichtlinearen, aufeinander folgenden Positionszeiger-Bewegungen bestehen (z.B. zur Bedienung spezieller virtueller Drehregler zunächst eine lineare Entfernung vom Ausgangspunkt mit anschließender Kreisbewegung oder zur Bedienung eines Menüs zunächst eine kurze diagonale Bewegung zum Einrücken in den Selektionsbereich des Menüs und dann eine senkrechte Bewegung zur Auswahl des Menüpunktes).
2.7. Konfiguration der simulierten Maus-Tasten-Signale, bevorzugt der Hauptselektions-Signale: Bei vielen handelsüblichen Mäusen mit mehreren Tasten gibt es die Möglichkeit, mit einer entsprechenden Software die Tastenbelegung zu konfigurieren, d. h. dass unterschiedliche Tasten z. B. als Hauptselektions-Taste und damit unterschiedliche Signale als Hauptselektions-Signale definiert werden können. Dementsprechend muss auch die erfindungsgemäße Eingabevorrichtung die Möglichkeit haben, die Signale, welche z. B. der "Hauptselektion" zugeordnet sind, als "Festhalte"-Signal zu generieren, um entsprechend zu funktionieren. (Ein relativ häufig vorkommendes Anwendungsbeispiel ist die Linkshänder-Tastenbelegung bei Mäusen, bei der wegen der größeren Beweglichkeit des Zeigefingers die rechte Maustaste als Hauptselektionstaste definiert wird. Diese Möglichkeit besteht häufig sogar von Seiten des Betriebssystems.) Es kann jedoch auch sinnvoll sein, andere Tasten-Signale als die der "Hauptselektion" zugeordneten zu generieren. Ein Beispiel hierfür wäre die meist sogenannte "rechte Maustaste" mit der ihr häufig zugeordneten Funktion des Aufrufs eines Kontext-Menüs. Eine entsprechende Lernfunktion der erfindungsgemäßen Eingabevorrichtung, welche die Signale der Tasten der angeschlossenen Maus analysieren kann, würde sich hier anbieten.
2.8. Konfiguration des zeitlichen Ablaufs insbesondere mehrerer simulierter Maus-Tasten-Signale: Neben der bevorzugten Simulation des Festhaltens einer Maustaste kann es sinnvoll sein, direkt nach dem Wechsel in den Arbeitsmodus ein oder mehrere unter 2.7. definierte Signale in einer abweichenden zeitlichen Abfolge zu generieren. Ein Beispiel hierfür wäre der sogenannte "Mausklick" (Drücken und Loslassen einer Taste) oder der sogenannte "Doppelklick" (Zweifaches Drücken und Loslassen einer Taste). Ein Anwendungsbeispiel wäre, direkt nach dem Wechsel in den Arbeits-Modus ein "Rechte Maustaste drücken und loslassen"-Signal zu generieren und damit bei geeigneter Mauszeiger-Position ein Kontextmenü auf dem zu steuernden Computer aufzurufen, um mit Hilfe einer durch weitere Betätigung des Drehreglers erzeugten (unter 2.6. eingestellten) senkrechten Mauszeiger-Bewegung einen Menüpunkt auszuwählen und diesen bei der Rückkehr in den Normal-Modus durch ein gleichzeitig gesendetes "Linke Maustaste drücken und loslassen"-Signal zu aktivieren.
2.9. Automatische Rückkehr in den Normal-Modus nach längerer Nicht-Nutzung des Drehreglers (Zeit definierbar, ein- und ausschaltbar).
2.10. Zusätzliche Generierung von Computer-Tastatur-Signalen: Beim Anschluss des Drehreglers beispielsweise an einen USB-Port wäre es möglich, zusätzlich zu den Maus-Signalen Signale an den zu steuernden Computer zu senden, welche durch ComputerTastaturen generiert werden. Dies könnte insbesondere dann sinnvoll sein, wenn virtuelle Drehregler zu bedienen sind. Diese sind manchmal nur dann mit einer linearen Mauszeiger-Bewegung über den gesamten Wertebereich zu verändern, wenn zusätzlich auf der Tastatur eine Shift-,
   Control-, Alt-Taste oder ähnliches gedrückt wird.
3. Konfiguration des Wechsels vom Arbeits-Modus in den Normal-Modus:
   3.1. Durch (beliebige oder definierte) Maustaste im Moment des Drückens oder im Moment des Loslassens (nach vorherigem Drücken) der Taste und/oder
   3.2. durch Mausbewegung
      3.2.1. Sofort
      3.2.2. Verzögert, wenn die Maus eine geringfügige (evtl. definierbare) Strecke verschoben wird, um das Risiko eines unbeabsichtigten Wechsels in den Normal-Modus zu minimieren
      3.2.3. Aktivierbare Option, welche einen Wechsel vom Arbeits-Modus in den Normal-Modus durch Mausbewegung erst dann ermöglicht, wenn keine Maustaste gedrückt ist oder andere Maus-Bedienelemente verwendet werden. Hierdurch wird ein ungewollter Wechsel in den Normal-Modus verhindert, wenn z.B. durch eine Maustaste lediglich ein Konfigurationswechsel während des Arbeits-Modus' ausgelöst werden soll und sich beim Drücken der entsprechenden Maustaste die Maus leicht bewegt
      und/oder
   3.3. Betätigung anderer Maus-Bedienelemente (z. B. Scrollrad) und/oder
   3.4. Schalter an der erfindungsgemäßen Eingabevorrichtung, z. B. Druckschalter am Drehregler in Achsrichtung
   3.5. Konfiguration des zeitlichen Ablaufs insbesondere mehrerer simulierter Maus-Tasten-Signale: Entsprechend wie 2.8. jedoch für den Wechsel vom Arbeits-Modus in den Normal-Modus: Eine Generierung von Maustasten-Signalen abweichend vom bevorzugten reinen "Loslassen"-Signal, z. B. Drücken und Loslassen der linken Maustaste, also ein sogenanntes "Mausklick"-Signal.
   3.6. Mauszeiger-Rücksprung-Funktion: Durch eine diagonale Bewegung des Mauszeigers kann sich dieser unter Umständen recht weit vom betätigten virtuellen Regler entfernen, welchen der Benutzer vornehmlich im Blick behält. Dies bedeutet, dass beim Wechsel vom Arbeitsin den Normal-Modus der Benutzer kurz den Mauszeiger auf dem Bildschirm suchen muss, was bei einer Vielzahl solcher Bedienschritte zu häufigem und somit ermüdendem Hin- und Herspringen der Augen führt. Abhilfe könnte hier eine Funktion schaffen, welche ab dem Zeitpunkt des Wechsels in den Arbeits-Modus die erzeugte Auslenkung des Mauszeigers speichert und beim Wechsel in den Normal-Modus durch eine entsprechende schnelle Gegenauslenkung den Mauszeiger zurücksetzt. Hierdurch könnte das "Augenspringen" minimiert werden, da der Benutzer den Mauszeiger an der Stelle wiederfindet, an der er ihn beim Wechsel in den Arbeits-Modus "abgelegt" hatte. Bei virtuellen Reglern, bei denen der Mauszeiger "einfriert", hätte diese Zusatzfunktion jedoch genau die entgegengesetzte Wirkung, die Auslenkungskompensation würde den Mauszeiger ungewollt versetzen. Daher muss diese Funktion abschaltbar sein.
4. Abschaltbarkeit der Modus-Anzeigen und Leuchtelemente zur Minimierung optischer Reize am Arbeitsplatz
5.Zuweisung unterschiedlicher Konfigurations-Aufruf-Routinen zu abgespeicherten Gesamt-Konfigurationen

Neben den editierbaren Gesamt-Konfigurationen können die zuvor beschriebenen.Einstellungen auch in von Herstellerseite bereits komplett fest abgespeicherten und nicht editierbaren Gesamt-Konfigurationen aufgerufen werden oder Gesamt-Konfigurationen bereit gestellt werden, bei welchen nur Teile der zuvor beschriebenen Einstellungen editierbar sind.

- Die Methode des Aufrufs verschiedener Konfigurationen hängt stark davon ab, ob die Konfigurationen in der Eingabevorrichtung selbst oder auf dem zu steuernden Computer abgespeichert sind. Es bieten sich hierfür als Bedienelemente z. B. ein oder mehrere zusätzliche Tasten/ Schalter an der erfindungsgemäßen Eingabevorrichtung und dessen Drehregler, sowie die Maus und die Computer-Tastatur jeweils auch in Kombination an. Die Visualisierung des Aufrufs kann auch mit einer entsprechenden Software auf dem Bildschirm des Computers erfolgen. Dabei kann die aufgerufene Konfiguration dauerhaft bis zum nächsten Aufruf einer anderen Konfiguration fortbestehen oder nur kurzzeitig von einer zu definierenden Standard-Konfiguration abweichen, bis z. B. eine entsprechende gedrückte Taste losgelassen wird, oder bis zum nächsten Wechsel in den Normal-Modus.

Hervorzuheben wäre hier ein Wechsel der Konfiguration durch Betätigen (und evtl. Halten) von entsprechend zugewiesenen Computer-Tasten (insbesondere die Umschalt-, Strg-, Alt- und Apfel-Taste) aber auch Maus-Tasten. So könnte im Arbeits-Modus z. B. die linke Maustaste zur Rückkehr in den Normal-Modus dienen und die rechte Maustaste zum Wechsel in eine andere Konfiguration. Dabei müsste der Anwender bei ausschließlicher Verwendung von Maus und erfindungsgemäßer Eingabevorrichtung wiederum nicht mehr umgreifen.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch macht. Insbesondere sind als Ausführungsformen Varianten denkbar, bei denen bezüglich der Hardware (insbesondere des Endlos-Drehreglers), der Unterbringung in anderen Gehäusen, der Geräte-Erkennung durch das zu steuernde System, der Signal-Generierung, der Datenübertragung und Schnittstellen, der Software-Anpassung (insbesondere Treiber) sowie der Editierung, der Speicherung und des Aufrufs von Konfigurationen auf bereits bestehende Komponenten des zu steuernden Systems zurückgegriffen wird.

### Bezugszeichenliste

- 10: Maus
- 11: Signalleitung Maus-Gerät
- 12: Schnittstelle Maus-Gerät
- 13: Gerät
- 14: Drehregler
- 15: Signalleitung Gerät-Computer
- 16: Schnittstelle Gerät-Computer (Mausport)
- 17: Computer
- 18: Bildschirm
- 19: Mauszeiger
- 20: (virtueller) Schieberegler

## Patentansprüche

1. Eingabevorrichtung (13) mit Drehregler (14) zur Steuerung von über eine grafische Benutzeroberfläche (18) einer Datenverarbeiturigseinrichtung (17) bedienbaren Programmen, wobei die Eingabevorrichtung (13) derart eingerichtet ist, dass bei Betätigung des Drehreglers (14) eine Signalfolge erzeugt wird, welche ein Betriebssystem der Datenverarbeitungseinrichtung (17) veranlasst, die Werte der für die Positionierung eines Positionszeigers (19) (Cursor) auf der grafische Benutzeroberfläche (1B) genutzten Daten derart zu ändern, dass der Positionszeiger (19) auf einer im wesentlichen linearen Bahn auf der grafischen Benutzeroberfläche (18) bewegt wird, wenn er gemäß der für die Positionierung genutzten Daten visualisiert wird,
**dadurch gekennzeichnet, dass**
die Eingabevorrichtung (13) weiter derart eingerichtet ist, dass zur Bedienung von Selektierten grafischen Bedienelementen und/oder Objekten auf der grafischen Benutzeroberfläche (18) die im wesentliche lineare Bahn des Cursors (19) schräg auf der grafischen Benutzeroberfläche (18) verlauft, wobei die Signalfolge eine Signalkomponente eines ersten Freiheitsgrades und eine Signalkomponente eines zweiten Freiheitsgrades umfasst, und die im wesentlichen lineare Bahn erzeugt wird, indem die Signalkomponente des ersten Freiheitsgrades und die Signalkomponente des zweiten Freiheitsgrades zueinander in ein Verhältnis gesetzt werden, das durch einen Proportionalitätsfaktor festgelegt ist.

2. Eingabevorrichtung nach Anspruch 1,
**dadurch gekennzeichnet, dass**
die Eingabevorrichtung (13) einen optischen und/oder mechanischen und/oder elektrischen Bewegungssensor umfasst.

3. Eingabevorrichtung nach Anspruch 2,
**dadurch gekennzeichnet, dass**
der Drehregler (14) an dem Bewegungssensor vorbeigeführt wird oder dass die Eingabevorrichtung (13) ein beweglich angeordnetes. Element umfasst, welches derart angeordnet ist, dass die Bewegungen des Elements von dem Bewegungssensor detektiert werden, und welches derart mit dem Drehregler (14) verbunden ist, dass das Element durch Betätigung des Drehreglers (14) an dem Bewegungssensor vorbeigeführt wird.

4. Eingabevorrichtung nach einem der voranstehenden Ansprüche,
**dadurch gekennzeichnet, dass**
die Eingabevorrichtung (13) ein Computerprogramm (Treiber) zur Kommunikation mit dem Betriebssystem der Datenverarbeitungseinrichtung (17) umfasst.

5. Eingabevorrichtung nach Anspruch 4,
**dadurch gekennzeichnet, dass**
der Treiber auf der Datenverarbeitungseinrichtung (17) installiert ist.

6. Eingabevorrichtung nach einem der voranstehenden Ansprüche,
**dadurch gekennzeichnet, dass**
die Eingabevorrichtung (13) mindestens eine Schnittstelle zu einer Mausschnittstelle (16) der Datenverarbeitungseinrichtung und/oder mindestens eine Schnittstelle (12) zu einer Computermaus (10) aufweist.

7. Eingabevorrichtung nach einem der voranstehenden Ansprüche,
**dadurch gekennzeichnet, dass**
die Eingabevorrichtung (13) mehrere Drehregler (14) und/oder Mittel zur Auswahl von auf der grafischen Benutzeroberfläche (18) dargestellten Objekten aufweist.

8. Eingabevorrichtung nach einem der voranstehenden Ansprüche,
**dadurch gekennzeichnet, dass**
die Eingabevorrichtung (13) in das Gehäuse der Datenverarbeitungseinrichtung (17) oder in Gehäuse von Peripheriegeräten der Datenverarbeitungseinrichtung (17) integriert ist.

9. Eingabeverfahren zur Steuerung von über eine grafische Benutzeroberfläche (18) einer Datenverarbeitungseinrichtung (17) bedienbaren Programmen, wobei eine Eingabevorrichtung (13) mit Drehregler (14) verwendet wird und bei Betätigung des Drehreglers (14) eine Signalfolge erzeugt wird, welche ein Betriebssystem der Datenverarbeitungseinrichtung (17) veranlasst, die Werte der für die Positionierung eines Positionszeigers (19) (Cursor) auf der grafischen Benutzeroberfläche (16) genutzten Daten derart zu ändern, dass der Positionszeiger (19) auf einer im wesentlichen linearen Bahn auf der grafischen Benutzeroberfläche (18) bewegt wird, wenn er gemäß der für die Positionierung genutzten Daten visualisiert wird,
**dadurch gekennzeichnet, dass**
zur Bedienung von Selektierten grafischen Bedienelementen und/oder Objekten auf der grafischen Benutzeroberfläche (18) die im wesentlichen lineare Bahn des Cursors (19) schräg auf der grafischen Benutzeroberfläche (18) verläuft, wobei die Signalfolge eine Signalkomponente eines ersten Freiheitgrades und eine Signalkomponente eines zweiten Freiheitsgrades umfasst, und die im wesentlichen lineare Bahn erzeugt wird, indem die Signalkomponente des ersten Freiheitsgrades und die Signalkomponente des zweiten Freiheitsgrades zueinander in ein Verhältnis gesetzt werden, das durch einen Proportionalitätsfaktor festgelegt ist.

10. Eingabeverfahren nach Anspruch 9,
**dadurch gekennzeichnet, dass**
in Abhängigkeit der Drehgeschwindigkeit des Drehreglers (19) Signalfolgen skaliert werden.

11. Eingabeverfahren nach Anspruch 9 oder 10,
**dadurch gekennzeichnet, dass**
bei Verwendung mehrerer Eingabevorrichtungen (10, 13) wenigstens einem Teil dieser Eingabevorrichtungen (10, 13) Prioritätswerte zugewiesen werden.

12. Eingabeverfahren nach einem der Anspruche 9 bis 11,
**dadurch gekennzeichnet, dass**
bei Verwendung mehrerer Eingabevorrichtungen (10, 13) durch die Betätigung einer der Eingabevorrichtungen wenigstens ein Teil der Eingabevorrichtungen desaktiviert oder von der Eingabe abgekoppelt wird.

13. Computerprogramm, das es einer Datenverarbeitungseinrichtung ermöglicht, nachdem es in den Speicher der Datenverarbeitungseinrichtung geladen worden ist, ein Eingabeverfahren zur Steuerung von über eine grafische Benutzeroberfläche (18) einer Datenverarbeitungseinrichtung (17) bedienbaren Programmen durchzuführen, wobei eine Eingabevorrichtung (13) mit Drehregler (14) verwendet wird und bei Betätigung des Drehreglers (14) eine Signalfolge erzeugt wird, welche ein Betriebssystem der Datenverarbeitungseinrichtung (17) veranlasst, die Werte der für die Positionierung eines Positionszeigers (19) (Cursor) auf der grafischen Benutzeroberfläche (18) genutzten Daten derart zu ändern, dass der Positionszeiger (19) auf einer im wesentlichen linearen Bahn auf der grafischen Benutzeroberfläche (18) bewegt wird, wenn er gemäß der für die Positionierung genutzten Daten visualisiert wird, wobei zur Bedienung von selektierte grafischen Bedienelementen und/oder Objekten auf der grafischen Benutzeroberfläche (18) die im wesentlichen lineare Bahn des Cursors (19) schräg auf der grafischen Benutzeroberfläche (18) verläuft, wobei die Signalfolge eine Signalkomponente eines ersten Freiheitsgrade und eine Signalkomponente eines zweiten Freiheitsgrades umfasst, und die im wesentlichen lineare Bahn erzeugt wird, indem die Signalkomponente des ersten Freiheitsgrades und die Signalkomponente des zweiten Freiheitsgrades zueinander in ein Verhältnis gesetzt werden, das durch einen Proportionalitätsfaktor festgelegt ist.

14. Computerlesbares Speichermedium, auf dem ein Programm gespeichert ist, das es einer Datenverarbeitungseinrichtung ermöglicht, nachdem es in den Speicher der Datenverarbeitungseinrichtung geladen worden ist, ein Eingabeverfahren zur Steuerung von über eine grafische Benutzeroberfläche (18) einer Datenverarbeitungseinrichtung (17) bedienbaren Programmen durchzuführen, wobei eine Eingabevorrichtung (13) mit Drehregler (14) verwendet wird und bei Betätigung des Drehreglers (14) eine Signalfolge erzeugt wird, welche ein Betriebssystem der Datenverarbeitungseinrichtung (17) veranlasst, die Werte der für die Positionierung eines Positionszeigers (19) (Cursor) auf der grafischen Benutzeroberfläche (18) genutzten Daten derart zu ändern, dass der Positionszeiger (19) auf einer im wesentlichen linearen Bahn auf der grafischen Benutzeroberfläche (18) bewegt wird, wenn er gemäß der für die Positionierung genutzten Daten visualisiert wird, wobei zur Bedienung von Selektierte grafischen Bedienelementen und/oder Objekten auf der grafischen Benutzeroberfläche (18) die im wesentlichen lineare Bahn des Cursors (19) schräg auf der grafischen Benutzeroberfläche (18) verläuft, wobei die Signalfolge eine Signalkomponente eines ersten Freiheitsgrades und eine Signalkomponente eines zweiten Freiheitsgrades umfasst, und die im wesentlichen lineare Bahn erzeugt wird, indem die Signalkomponente des ersten Freiheitsgrades und die Signalkomponente des zweiten Freiheitsgrades zueinander in ein Verhältnis gesetzt werden, das durch einen Proportionalitätsfaktor festgelegt ist.

## Claims

1. Input device (13) with rotary control knob (14) for controlling programs which can be controlled via a graphic user interface (18) of a data processing system (17), where the input device (13) is configured such that upon activation of the rotary control knob (14) a signal string is generated which causes an operating system of the data processing system (17) to change the values of data used for positioning a cursor (19) on the graphic user interface (18) so that the cursor (19) is moved along an essentially linear path on the graphic user interface (18), when the cursor (19) is visualized according to the data used for the positioning,
**characterized in that**
the input device (13) is further configured such that for controlling of selected graphic control elements and/or objects on the graphic user interface (18) the essentially linear path of the cursor (19) runs on the graphic user interface with a slant, where the signal string comprises a signal component of a first degree of freedom and a signal component of a second degree of freedom, and the essentially linear path is generated by setting in proportion the signal component of the first degree of freedom to the signal component of the second degree of freedom, where the proportion is defined by a proportionality factor.

2. Input device according to claim 1,
**characterized in that**
the input device (13) comprises an optical and/or mechanical and/or electrical motion sensor.

3. Input device according to claim 2,
**characterized in that**
the rotary control knob (14) is moved past the motion sensor, or that the input device (13) comprises a movable element which is arranged such that the movements of the element are detected by the motion sensor, and which is connected with the rotary control knob (14) in such a way that the element is moved past the motion sensor by activating the rotary control knob (14).

4. Input device according to one of the preceding claims,
**characterized in that**
the input device (13) comprises a computer program (a driver) for communicating with the operating system of the data processing system (17).

5. Input device according to claim 4,
**characterized in that**
the driver is installed on the data processing system (17).

6. Input device according to one of the preceding claims,
**characterized in that**
the input device (13) has at least one interface to a mouse interface (16) of the data processing system and/or at least one interface (12) to a computer mouse (10).

7. Input device according to one of the preceding claims,
**characterized in that**
the input device (13) includes several rotary control knobs (14) and/or means for selecting objects displayed on the graphic user interface (18).

8. Input device according to one of the preceding claims,
**characterized in that**
the input device (13) is integrated in the housing of the data processing system (17) or in the housing of peripheral devices of the data processing system (17).

9. Input method for controlling programs that can be operated via a graphic user interface (18) of a data processing system (17), wherein an input device (13) with a rotary control knob (14) is used, and upon activation of the rotary control knob (14) a signal string is generated, which causes an operating system of the data processing system (17) to change the values of data used for positioning a cursor (19) on the graphic user interface (18) so that the cursor (19) is moved on the graphic user interface (18) along an essentially linear path, when the cursor (19) is visualized according to the data used for the positioning,
**characterized in that**
for controlling of selected graphic control elements and/or objects on the graphic user interface (18) the essentially linear path of the cursor (19) runs on the graphic user interface with a slant, where the signal string comprises a signal component of a first degree of freedom and a signal component of a second degree of freedom, and the essentially linear path is generated by setting in proportion the signal component of the first degree of freedom to the signal component of the second degree of freedom, where the proportion is defined by a proportionality factor.

10. Input method according to claim 9,
**characterized in that**
signal strings are scaled depending on the rotation speed of the rotary control knob (14).

11. Input method according to claim 9 to 10,
**characterized in that**
when using several input devices (10, 13), priority values are assigned to at least a portion of these input devices (10, 13).

12. Input method according to one of the claims 9 to 11,
**characterized in that**
when using several input devices (10, 13), through activation of one of the input devices at least a portion of the input devices is deactivated or decoupled from the input.

13. Computer program which enables a data processing system, after the computer program has been loaded into memory of the data processing system, to execute an input method for controlling programs that can be operated via a graphic user interface (18) of a data processing system (17), wherein an input device (13) with a rotary control knob (14) is used and a signal string is generated upon activation of the rotary control knob (14), which signal string causes an operating system of the data processing system (17) to change the values of data used for positioning a cursor (19) on the graphic user interface (18) so that the cursor (19) is moved along an essentially linear path on the graphic user interface (18), when the cursor (19) is visualized according to the data used for the positioning, where for controlling of selected graphic control elements and/or objects on the graphic user interface (18) the essentially linear path of the cursor (19) runs on the graphic user interface with a slant, where the signal string comprises a signal component of a first degree of freedom and a signal component of a second degree of freedom, and the essentially linear path is generated by setting in proportion the signal component of the first degree of freedom to the signal component of the second degree of freedom, where the proportion is defined by a proportionality factor.

14. Computer-readable storage medium, on which a program is stored which enables a data processing system, after the program has been loaded into the memory of the data processing system, to execute an input method for controlling programs that can be operated via a graphic user interface (18) of a data processing system (17), wherein an input device (13) with a rotary control knob (14) is used and a signal string is generated upon activation of the rotary control knob (14), which signal string causes an operating system of the data processing system (17) to change the values of data used for positioning a cursor (19) on the graphic user interface (18) so that the cursor (19) is moved along an essentially linear path on the graphic user interface (18), when the cursor (19) is visualized according to the data used for the positioning, where for controlling of selected graphic control elements and/or objects on the graphic user interface (18) the essentially linear path of the cursor (19) runs on the graphic user interface with a slant, where the signal string comprises a signal component of a first degree of freedom and a signal component of a second degree of freedom, and the essentially linear path is generated by setting in proportion the signal component of the first degree of freedom to the signal component of the second degree of freedom, where the proportion is defined by a proportionality factor.

## Revendications

1. Dispositif d'entrée (13) avec bouton rotatif (14) pour la commande de programmes contrôlables par le biais d'une interface utilisateur graphique (18) d'une installation de traitement des données (17), le dispositif d'entrée (13) étant configuré de telle sorte que, lors de l'actionnement du bouton rotatif (14), une séquence de signaux est générée, laquelle ordonne à un système d'exploitation de l'installation de traitement des données (17) de modifier les valeurs des données utilisées pour le positionnement d'un indicateur de position (19) (curseur) sur l'interface utilisateur graphique (18), de telle sorte que l'indicateur de position (19) est déplacé sur un trajet essentiellement linéaire sur l'interface graphique utilisateur (18), lorsqu'il est visualisé conformément aux données utilisées pour le positionnement,
**caractérisé en ce que**
le dispositif d'entrée (13) est en outre configuré de telle sorte que, pour le contrôle d'éléments de contrôle et/ou d'objets graphiques sélectionnés sur l'interface graphique utilisateur (18), le trajet essentiellement linéaire du curseur (19) est oblique sur l'interface graphique utilisateur (18), la séquence de signaux comprenant une composante de signal d'un premier degré de liberté et une composante de signal d'un deuxième degré de liberté, et le trajet essentiellement linéaire étant généré en réalisant un rapport entre la composante de signal du premier degré de liberté et la composante de signal du deuxième degré de liberté qui est défini par un facteur de proportionnalité.

2. Dispositif d'entrée selon la revendication 1,
**caractérisé en ce que**
le dispositif d'entrée (13) comprend un capteur de mouvement optique et/ou mécanique et/ou électrique.

3. Dispositif d'entrée selon la revendication 2,
**caractérisé en ce que**
le bouton rotatif (14) est déplacé devant le capteur de mouvement ou **en ce que** le dispositif d'entrée (13) comprend un élément disposé de façon mobile, lequel est disposé de telle sorte que les mouvements de l'élément sont détectés par le capteur de mouvement, et lequel est relié avec le bouton rotatif (14) de telle sorte que l'élément est déplacé devant le capteur de mouvement par l'actionnement du bouton rotatif (14).

4. Dispositif d'entrée selon l'une des revendications précédentes,
**caractérisé en ce que**
le dispositif d'entrée (13) comprend un programme informatique (pilote) pour la communication avec le système d'exploitation de l'installation de traitement des données (17).

5. Dispositif d'entrée selon la revendication 4,
**caractérisé en ce que**
le pilote est installé sur l'installation de traitement des données (17).

6. Dispositif d'entrée selon l'une des revendications précédentes,
**caractérisé en ce que**
le dispositif d'entrée (13) présente au moins une interface vers une interface de souris (16) de l'installation de traitement des données et/ou au moins une interface (12) vers une souris informatique (10).

7. Dispositif d'entrée selon l'une des revendications précédentes,
**caractérisé en ce que**
le dispositif d'entrée (13) présente plusieurs boutons rotatifs (14) et/ou des moyens pour la sélection d'objets représentés sur l'interface graphique utilisateur (18).

8. Dispositif d'entrée selon l'une des revendications précédentes,
**caractérisé en ce que**
le dispositif d'entrée (13) est intégré dans le boîtier de l'installation de traitement des données (17) ou dans le boîtier d'appareils périphériques de l'installation de traitement des données (17).

9. Procédé d'entrée pour la commande de programmes contrôlables par le biais d'une interface utilisateur graphique (18) d'une installation de traitement des données (17), un dispositif d'entrée (13) avec bouton rotatif (14) étant utilisée et, lors de l'actionnement du bouton rotatif (14), une séquence de signaux est générée, laquelle ordonne à un système d'exploitation de l'installation de traitement des données (17) de modifier les valeurs des données utilisées pour le positionnement d'un indicateur de position (19) (curseur) sur l'interface utilisateur graphique (18), de telle sorte que l'indicateur de position (19) est déplacé sur un trajet essentiellement linéaire sur l'interface graphique utilisateur (18), lorsqu'il est visualisé conformément aux données utilisées pour le positionnement,
**caractérisé en ce que**
pour le contrôle d'éléments de contrôle et/ou d'objets graphiques sélectionnés sur l'interface graphique utilisateur (18), le trajet essentiellement linéaire du curseur (19) est oblique sur l'interface graphique utilisateur (18), la séquence de signaux comprenant une composante de signal d'un premier degré de liberté et une composante de signal d'un deuxième degré de liberté, et le trajet essentiellement linéaire étant généré en réalisant un rapport entre la composante de signal du premier degré de liberté et la composante de signal du deuxième degré de liberté qui est défini par un facteur de proportionnalité.

10. Procédé d'entrée selon la revendication 9,
**caractérisé en ce que**
des séquences de signaux sont graduées en fonction de la vitesse de rotation du bouton rotatif (14).

11. Procédé d'entrée selon la revendication 9 ou 10,
**caractérisé en ce que**
lors de l'utilisation de plusieurs dispositifs d'entrée (10, 13), des valeurs de priorité sont attribuées à au moins une partie de ces dispositifs d'entrée (10, 13).

12. Procédé d'entrée selon l'une des revendications 9 à 11,
**caractérisé en ce que**
lors de l'utilisation de plusieurs dispositifs d'entrée (10, 13), au moins une partie des dispositifs d'entrée est désactivée ou découplée de l'entrée par l'actionnement d'un des dispositifs d'entrée.

13. Programme informatique permettant à une installation de traitement des données, après avoir été chargé dans la mémoire de l'installation de traitement des données, d'exécuter un procédé d'entrée pour la commande de programmes contrôlables par le biais d'une interface utilisateur graphique (18) d'une installation de traitement des données (17), un dispositif d'entrée (13) avec bouton rotatif (14) étant utilisé et, lors de l'actionnement du bouton rotatif (14), une séquence de signaux étant générée, laquelle ordonne à un système d'exploitation de l'installation de traitement des données (17) de modifier les valeurs des données utilisées pour le positionnement d'un indicateur de position (19) (curseur) sur l'interface utilisateur graphique (18), de telle sorte que l'indicateur de position (19) est déplacé sur un trajet essentiellement linéaire sur l'interface graphique utilisateur (18), lorsqu'il est visualisé conformément aux données utilisées pour le positionnement, le trajet essentiellement linéaire du curseur (19) étant oblique sur l'interface graphique utilisateur (18) pour le contrôle d'éléments de contrôle et/ou d'objets graphiques sélectionnés sur l'interface graphique utilisateur (18), la séquence de signaux comprenant une composante de signal d'un premier degré de liberté et une composante de signal d'un deuxième degré de liberté, et le trajet essentiellement linéaire étant généré en réalisant un rapport entre la composante de signal du premier degré de liberté et la composante de signal du deuxième degré de liberté qui est défini par un facteur de proportionnalité

14. Support mémoire lisible par ordinateur, sur lequel un programme est mémorisé, lequel permet à une installation de traitement des données, après avoir été chargé dans la mémoire de l'installation de traitement des données, d'exécuter un procédé d'entrée pour la commande de programmes contrôlables par le biais d'une interface utilisateur graphique (18) d'une installation de traitement des données (17), un dispositif d'entrée (13) avec bouton rotatif (14) étant utilisé et, lors de l'actionnement du bouton rotatif (14), une séquence de signaux étant générée, laquelle ordonne à un système d'exploitation de l'installation de traitement des données (17) de modifier les valeurs des données utilisées pour le positionnement d'un indicateur de position (19) (curseur) sur l'interface utilisateur graphique (18), de telle sorte que l'indicateur de position (19) est déplacé sur un trajet essentiellement linéaire sur l'interface graphique utilisateur (18), lorsqu'il est visualisé conformément aux données utilisées pour le positionnement, le trajet essentiellement linéaire du curseur (19) étant oblique sur l'interface graphique utilisateur (18) pour le contrôle d'éléments de contrôle et/ou d'objets graphiques sélectionnés sur l'interface graphique utilisateur (18), la séquence de signaux comprenant une composante de signal d'un premier degré de liberté et une composante de signal d'un deuxième degré de liberté, et le trajet essentiellement linéaire étant généré en réalisant un rapport entre la composante de signal du premier degré de liberté et la composante de signal du deuxième degré de liberté qui est défini par un facteur de proportionnalité.
